Europäisches Patentamt

European Patent Office

Office européen des brevets

(19)

(11) Veröffentlichungsnummer: **0 384 949**

**A2**

(12) **EUROPÄISCHE PATENTANMELDUNG**

(21) Anmeldenummer: **89111649.3**

(22) Anmeldetag: **27.06.89**

(51) Int. Cl.5: **G10K 11/00, B06B 1/06**

(30) Priorität: **25.02.89 DE 8902375 U**

(43) Veröffentlichungstag der Anmeldung:
**05.09.90 Patentblatt 90/36**

(84) Benannte Vertragsstaaten:
**AT BE CH DE ES FR GB GR IT LI LU NL SE**

(71) Anmelder: **KRONE Aktiengesellschaft**
**Beeskowdamm 3-11**
**D-1000 Berlin 37(DE)**

(72) Erfinder: **Thelen, Wolfgang, Prof.**
**Alemannenstrasse 13**
**D-1000 Berlin 28(DE)**
Erfinder: **Lorenz, Wolfgang**
**Heilmannring 73B**
**D-1000 Berlin 13(DE)**
Erfinder: **Templin, Klaus**
**Pfalzburger Strasse 71**
**D-1000 Berlin 31(DE)**
Erfinder: **Lohr, Joachim**
**Holsteinische Strasse 6**
**D-1000 Berlin 31(DE)**

(54) **Ultraschall-Messgerät.**

(57) Die Erfindung bezieht sich auf ein Ultraschall-Meßgerät zur Ermittlung von Bewegungsparametern bewegter Körper, insbesondere Weg, Geschwindigkeit, Beschleunigung, Schlupf oder dergleichen mit zwei in einem Gehäuse gelagerten Ultraschallwandlern (Sender und Empfänger) aus je einem Schallerzeuger bzw. einem Schallempfänger, zwei Schwingkörpern und einem den Schallerzeuger bzw. Schallempfänger zwischen den Schwingkörpern einspannenden Verbindungselement. Um die Übertragung von Ultraschallwellen , die von den Ultraschallwandlern, insbesondere vom Sender, erzeugt werden, auf das Gehäuse zu vermeiden, ist jeder Ultraschallwandler (4,5) des Ultraschall-Meßgerätes mittels mäanderförmig abgewinkelter Lagerelemente (25,26) im Gehäuse (1) gelagert, wobei das an der Schallaustrittsöffnung (12) bzw. Schalleintrittsöffnung (13) des Gehäuses (1) angeordnete Lagerelement (25) auf einem Schwingkörper (8) gleitbar gelagert ist.

# ULTRASCHALL-MESSGERÄT

Die Neuerung bezieht sich auf ein Ultraschall-Meßgerät zur Ermittlung von Bewegungsparametern bewegter Körper, insbesondere Weg, Geschwindigkeit, Beschleunigung, Schlupf oder dergleichen, mit zwei in einem Gehäuse gelagerten Ultraschallwandlern (Sender und Empfänger) aus je einem Schallerzeuger, zwei Schwingkörpern und einem den Schallerzeuger zwischen den Schwingkörpern einspannenden Verbindungselement. Für ein piezoelektrisches Meßverfahren besteht der Schallerzeuger aus einem Quarzkristall, insbesondere Piezokeramik.

Ein Meßgerät dieser Art ist der DE 31 22 963 C3 vorbekannt. Dieses dient zum selbsttätigen Messen von Geschwindigkeit und Weg eines beweglichen Körpers, insbesondere zur automatischen Spurführung eines Kraftfahrzeuges. Hierzu sind am Fahrzeugboden in einem der Fahrzeugbreite entsprechenden Abstand zwei Meßgeräte installiert, die je zwei in Fahrzeuglängsrichtung in unterschiedlichen Winkeln schräg zur Fahrbahn ausgerichtete Ultraschall-Sender und -Empfänger aufweisen, welche mit einer Recheneinheit verbunden sind, die aus den Meßwerten und aus Sollwerten Stellgrößen für den Lenkantrieb des Fahrzeuges erzeugt. Das Meßgerät ist in seiner speziellen Bauweise jedoch nicht näher beschrieben.

Es ist jedoch bekannt, daß Ultraschallwandler den Schall nicht nur an die Luft abgeben, sondern ebenfalls an das Gehäuse, in dem diese eingebaut sind. Der Schall im Gehäuse ist um ein Vielfaches höher als der aus der Luft zum Empfänger zurückkommende Schall. Dies führt zu fehlerhaften Meßergebnissen.

Der Neuerung liegt von daher die Aufgabe zugrunde, das Ultraschall-Meßgerät der gattungsgemäßen Art so auszubilden, daß die Übertragung von Ultraschallwellen, die von den Ultraschallwandlern, insbesondere vom Sender, erzeugt werden, auf das Gehäuse vermieden ist.

Zur Lösung dieser Aufgabe sieht die Neuerung vor, daß jeder Ultraschallwandler mittels mäanderförmig abgewinkelter Lagerelemente im Gehäuse gelagert ist, wobei das an der Schallaustritts- bzw. Schalleintrittsöffnung des Gehäuses angeordnete Lagerelement auf einem Schwingkörper gleitbar gelagert ist. Diese Anordnung bewirkt, daß vom Sender-Ultraschallwandler abgegebene und vom Empfänger-Ultraschallwandler empfangene Ultraschallsignale nicht an das Gehäuse abgegeben werden, in dem die Ultraschallwandler eingebaut sind. Dies wird durch die mäanderförmige Abwinkelung der Lagerelemente und durch die gleitbare Lagerung des einen Lagerelementes auf dem zugehörigen Schwingkörper erreicht. Jeder Ultraschallwandler ist am Gehäuse nur mit seinem einen mäanderförmig abgewinkelten Lagerelement festgelegt, das der Schallaustritts- bzw. Schalleintrittsöffnung gegenüberliegt, wohingegen das andere Lagerelement eine freie Beweglichkeit des Ultraschallwandlers in seiner Axialrichtung im Bereich der Schallaustritts- bzw. Schalleintrittsöffnung ermöglicht.

Die mäanderförmig abgewinkelten Lagerelemente sind aus radial verlaufenden, scheibenartigen Wandungsteilen und zwei parallel verlaufenden hülsenartigen Wandungsteilen gebildet, an deren freien Enden sich Lagerflansche anschließen. Die Wandungsteile weisen relativ dünne Wanddicken auf, die den Schall reduzieren. Zusätzlich wird eine Dämpfung durch die scharfkantigen, mäanderförmigen Abwinkelungen der Lagerelemente erzielt. Gleichzeitig halten die Lagerelemente die Ultraschallwandler im Gehäuse fest und fixieren diese auch in der Schallrichtung. Die Lagerflansche der Lagerelemente sind mit umlaufenden Einstichen zur Aufnahme von O-Ringen versehen, welche die Lagerelemente gegen die Wandler und gegen das Gehäuse vor Einflüssen von außen abdichten.

Der Aufbau der Ultraschallwandler aus je einem Schallerzeuger, zwei Schwingkörpern und einem den Schallerzeuger zwischen den Schwingkörpern einspannenden Verbindungselement wird in weiterer Ausbildung der Neuerung dadurch erheblich verbessert, daß durch die Verwandung eines Tellerfederpaketes der Kontakt zwischen den einzelnen Bauelementen gewährleistet ist und damit ein einwandfreies Senden bzw. Empfangen erreicht wird. Mittel der Tellerfederpakete ist eine Vorspannung bei 2000 kp möglich. Hierdurch werden die im Betriebszustand durch entstehende Wärme auftretenden unterschiedlichen Wärmeausdehnungen besonders günstig kompensiert.

Das Gehäuse weist in weiterer neuerungsgemäßer Ausbildung trichterförmige Aus- bzw. Eintrittsöffnungen für die Schallwellen auf. Die Randbereiche der Öffnungen sind mit Radien versehen. Somit können die Schallwellen in besonders günstiger Weise über die Ultraschallwandler direkt an die Luft angekoppelt werden, ohne daß bei den Schallwellen Beugungen entstehen, die zu ungenauen Meßergebnissen führen würden.

Schließlich wird die beim Betreiben des Senders bzw. Ultraschallwandlers gegenüber der Umgebungstemperatur entstehende höhere Temperatur bis zu 50 °C durch einen an den Sender-Ultraschallwandler anschließenden Kühlkörper kompensiert. Um auch bei Minus-Temperaturen einen einwandfreien Empfang sicherzustellen, wird der Empfänger-Ultraschallwandler mit Hilfe eines Heizelementes, insbesondere eines PTC'S beheizt.

Weitere vorteilhafte Ausgestaltungen der Neuerung ergeben sich aus den weiteren Unteransprüchen.

Die Neuerung ist nachfolgend anhand eines in den Zeichnungen näher dargestellten Ausführungsbeispieles eines Ultraschall-Meßgerätes näher erläutert:

Es zeigen:

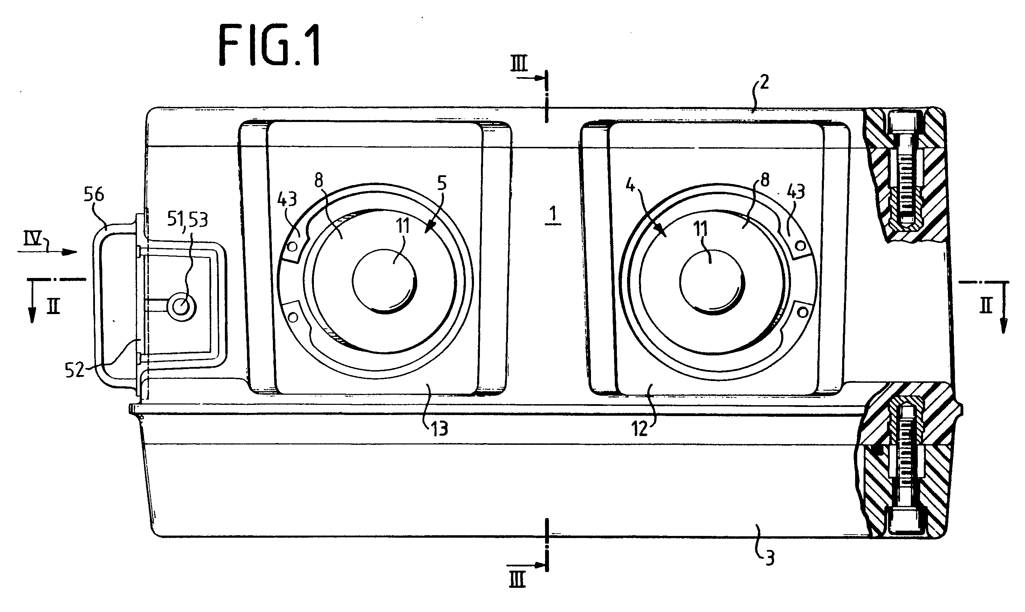

Fig. 1 eine Ansicht auf die Austritts- und Eintrittsöffnungen des Ultraschall-Meßgerätes,

Fig. 2 einen Querschnitt gemäß der Linie II-II in Fig. 1 durch die Mittenebene der Ultraschallwandler,

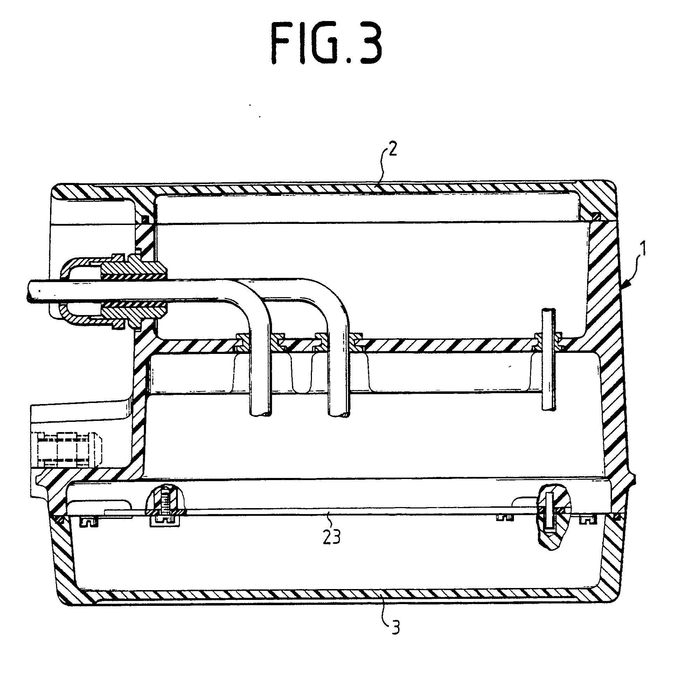

Fig. 3 einen Querschnitt gemäß der Linie III-III in Fig.1,

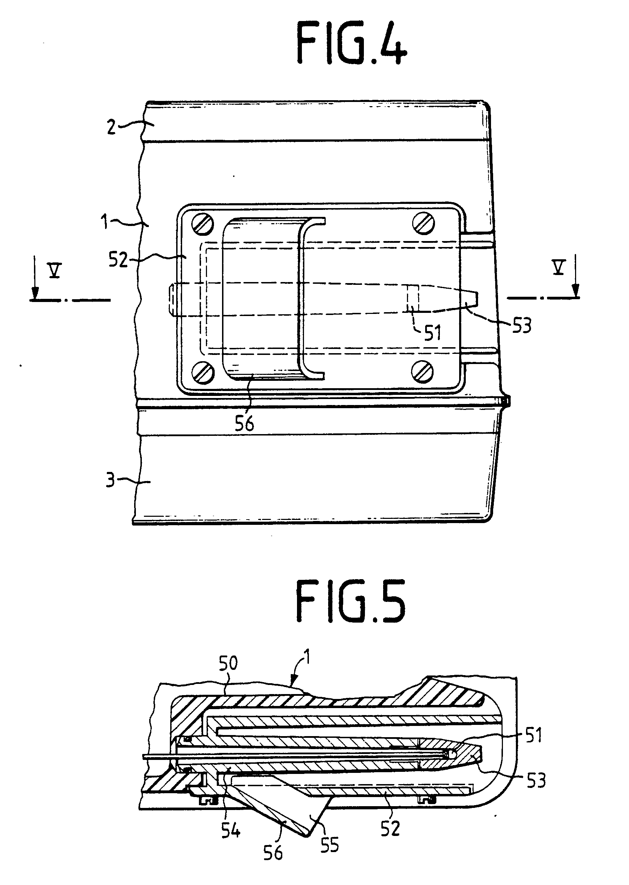

Fig. 4 eine Ansicht gemäß Pfeil IV in Fig. 1,

Fig. 5 einen Teilschnitt gemäß der Linie V-V in Fig. IV und

Fig. 6 ein vergrößertes Detail VI aus Figur 2.

Das Ultraschall-Meßgerät besteht aus einem Gehäuse 1 mit oberem Gehäusedeckel 2 und unterem Gehäusedeckel 3. Im Gehäuse 1 sind ein als Sender geschalteter Ultraschallwandler 4 und ein als Empfänger geschalteter Ultraschallwandler 5 derart angeordnet, daß deren Längsachsen 49 unter einem spitzen Winkel in Richtung auf die trichterförmigen und mit Radien 57 ausgebildeten Schallaustritts- bzw. Schalleintrittsöffnungen 11,12 zueinander verlaufen.

Jeder Ultraschallwandler 4,5 besteht aus zwei scheibenförmigen Schallerzeugern bzw. Schallempfängern 6 bzw. 7, die zwischen zwei Schwingkörpern 8,9 eingespannt sind. Zur Einspannung sind die Schallerzeuger bzw. Schallermpfänger 6,7 und die Schwingkörper 8,9 scheibenförmig ausgebildet und auf Zylinderschrauben 10 aufgesteckt, deren Schraubenköpfe 11 in der Schallaustrittsöffnung 12 bzw. in der Schalleintrittsöffnung 13 angeordnet und mit Abschlußkappen 58 versehen sind. Zwischen den Schwingkörpern 8,9 und den angrenzenden Schallerzeugern 6 bzw. Schallempfängern 7 sind Kontaktscheiben 14 angeordnet, deren mittlere mit einer Kontaktfahne 15 versehen ist. Eine Isolierhülse 16 isoliert die Schallerzeuger 6 bzw. Schallempfänger 7 gegenüber der Zylinderschraube 10. Auf die Zylinderschraube 10 ist auf der Innenseite des Gehäuses 1 ein Aufnahmering 17 aufgesteckt, der ein Tellerfederpaket 18 trägt, das mittels einer Reduzierscheibe 19 über eine auf der Zylinderschraube 10 schraubbare Mutter 20 gespannt werden kann. Auf diese Weise kann eine Vorspannkraft von ca. 2000 kp aufgebracht werden, mit welcher die Schallerzeuger 6 bzw. Schallempfänger 7 zwischen den Schwingkörpern 8,9 eingespannt werden.

Die jeweils äußeren Kontaktscheiben 14 eines jeden Ultraschallwandlers 4,5 sind mit Kontaktfahnen 21 versehen. Die Kontaktfahnen 15 und 21 sind an die Adern zweiadriger Leitungen 22 angeschlossen, welche zu einer im unteren Gehäuseteil 3 gelagerten, bestückten Leiterplatten 23 geführt sind. Der Aufnahmering 17 des Sende-Ultraschallwandlers 4 ist zusätzlich mit einem PTC-Thermofühler 24 versehen, der über nicht näher dargestellte Kabeladern ebenfalls mit der Leiterplatte 23 verbunden ist.

Jeder Ultraschallwandler 4,5 ist mittels mäanderförmig abgewinkelter Lagerelemente 25,26 im Gehäuse 1 gelagert. Jedes mäanderförmig abgewinkelte Lagerelement 25,26 ist einstückig aus zwei parallel zur Längsachse des Ultraschallwandlers 4,5 verlaufenden dünnwandigen, hülsenartigen Wandungsteilen 27, 28 und einem diese verbindenden, radial verlaufenden, dünnwandigen, scheibenartigen Wandungsteil 29 sowie an die freien Enden der hülsenartigen Wandungsteile 27,28 anschließenden radialen Lagerflanschen 30 bis 33 gebildet. Die dünnwandigen, hülsenartigen Wandungsteile 27,28 des einen Lagerelementes 26 sind etwa gleich lang, wohingegen die dünnwandigen, hülsenartigen Wandungsteile 27,28 des anderen Lagerelementes 25 unterschiedliche Länge aufweisen. So ist der innenseitige hülsenartige Wandungsteil 28 des Lagerelementes 25 etwa doppelt so lang wie der äußere hülsenartige Wandungsteil 27 dieses Lagerelementes 25. Die Lagerelemente 25,26 halten die Ultraschallwandler 4,5 im Gehäuse 1 und fixieren diese in der Richtung. Gleichzeitig wird durch die dünnwandige, mäanderförmige Ausgestaltung der Wandungsteile 27,28,29 und deren scharfkantigen Abwinkelungen eine wesentliche Schalldämpfung erreicht.

Die äußeren Lagerflansche 30,32 der Lagerelemente 25,26 sind mit Eindrehungen für O-Ringe 34 versehen, die eine Abdichtfunktion haben. Die inneren Lagerflansche 31 der Lagerelemente 26 weisen je drei Eindrehungen für O-Ringe 35 auf. Schließliche weist der innere Lagerflansch 33 der Lagerelemente 25 eine Eindrehung für einen O-Ring 36 auf, der auf der äußeren Umfangsfläche des äußeren Schwingkörpers 8 der Ultraschallwandler 4,5 abdichtend gleitbar ist.

Jeder Ultraschallwandler 4,5 ist mittels seines Lagerelementes 26 an einem Ende fest im Gehäuse 1 gelagert. Hierzu sind auf die Zylinderschrauben 10 Endstücke 37 aufgeschraubt, die die inneren Lagerflansche 31 der Lagerelemente 26 gegen auf die freien Enden der Zylinderschrauben 10 aufgeschobenen Lagerscheiben 38 einspannen, die sich an den aufgeschraubten Muttern 20 abstützen. Das Endstück 37 des Sender-Ultraschallwandlers 4 ist mit einem Kühlkörper 39 versehen, der außerhalb des Gehäuses 1 liegt, und von einem Faltenbalg 40 umgeben, der zwischen dem äußeren Lagerflansch 34 des Lagerelementes 26 und einem weiteren Lagerring 41 eingespannt ist, der zur Außenseite des Gehäuses 1 hin mittels eines Seegerringes 42 fixiert ist. Entsprechende Seegerringe 43 sind im Bereich der Schallaustrittsöffnung 12 und der Schallein trittsöffnung 13 zur Festlegung der äußeren Flansche 32 der Lagerelemente 25 angeordnet.

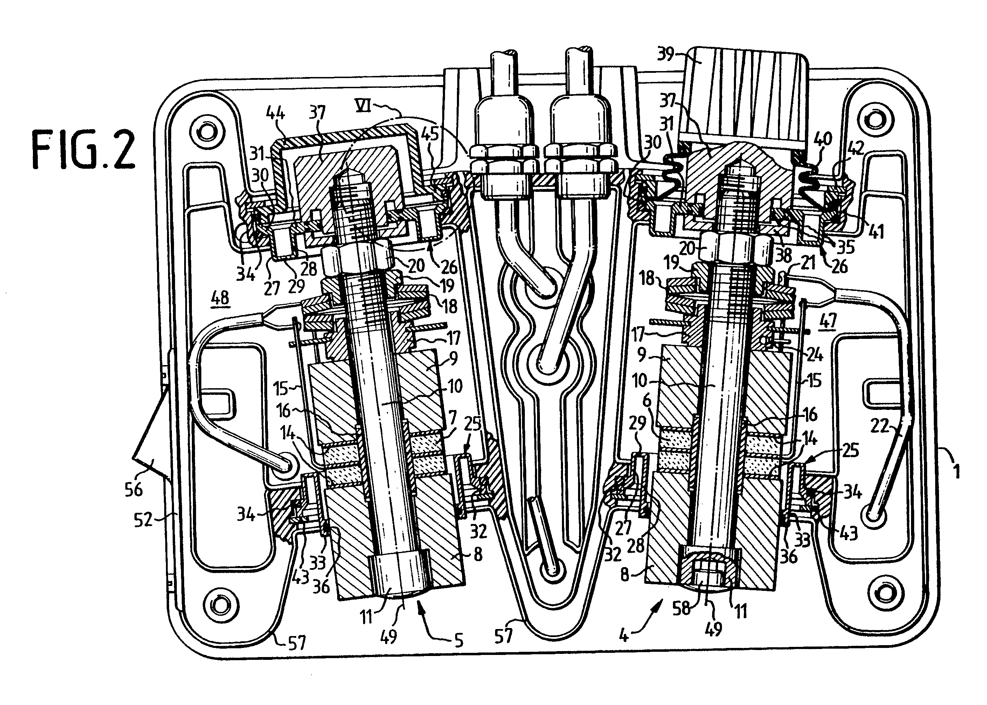

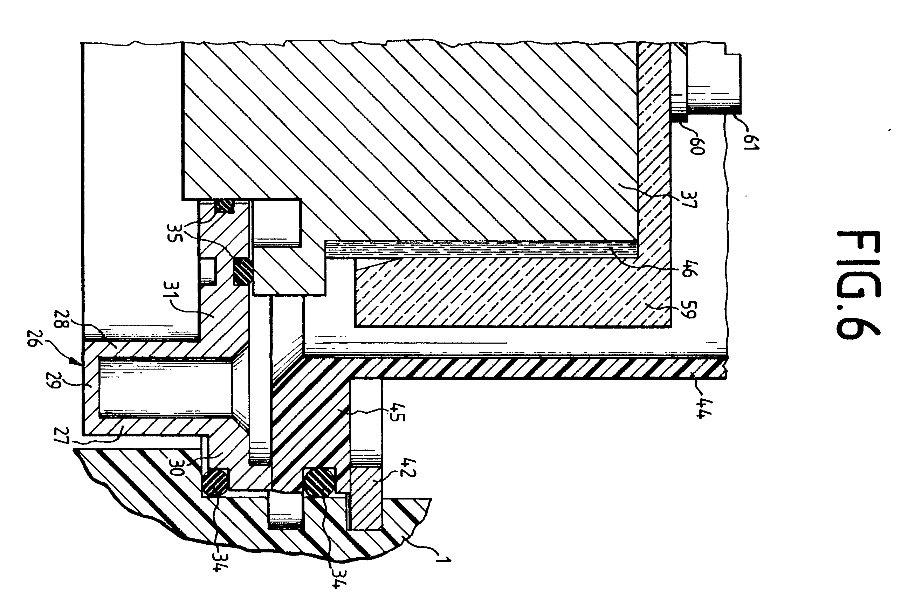

Das Endstück 27 des Empfänger-Utraschallwandlers 5 ist von einer Kappe 44 umgeben, welche mit ihrem Flansch 45 zwischen einem im Gehäuse 1 festgelegten Seegerring 42 und dem äußeren Flansch 30 des Lagerelementes 26 eingespannt ist. Im Bereich der Kappe 44 ist ein Heizelement 46, insbesondere ein PTC-Heizelement angeordnet, das zur Beheizung des Empfänger-ULtraschallwandlers 5 bei Temperaturen dient, die unter dem Gefrierpunkt liegen. Wie es die Fig.6 zeigt, umgibt das in Fig. 2 nicht dargestellte, aus mehreren PTC-Plättchen bestehende Heizelement 46 das Endstück 37 und ist mittels einer aufgestülpten Klemmkappe 59 festgelegt, die mittels einer Schraube 61 und untergelegten Sicherungsscheibe 60 fixiert ist.

In einer Seitenwand des Gehäuses 1 ist eine Aussparung 50 für einen NTC-Thermofühler 51 vorgesehen, welcher in eine Schutzhaube 52 eingesetzt ist und mit einem Schalldämpfer 53 am vorderen Ende versehen ist. Die Schutzhaube 52 ist kastenartig ausgebildet und weist einen mittleren rohrförmigen Teil 54 auf, in den der NTC-Thermofühler 51 eingesetzt ist. Der den rohrförmigen mittleren Teil 54 umgebende Luftraum dient zur Umströmung des NTC-Thermofühlers 51 mit der Umgebungsluft. Zur Verbesserung der Strömung ist eine Luftaustrittsöffnung 55 in der kastenförmigen Schutzhaube 52 vorgesehen, welche im Bereich des inneren Endes des rohrförmigen mittleren Teiles 54 liegt und welche mit einer schräg nach außen und nach vorne in Richtung auf das freie Ende des NTC-Thermofühlers 51 verlaufenden Schutzkappe 56 versehen ist.

1 Gehäuse
2 oberer Gehäusedeckel
3 unterer Gehäusedeckel
4 Sender-Ultraschallwandler
5 Empfänger-Ultraschallwandler
6 Schallerzeuger
7 Schallempfänger
8,9 Schwingkörper
10 Zylinderschraube
11 Schraubkopf
12 Schallaustrittsöffnung
13 Schalleintrittsöffnung
14 Kontaktscheibe
15 Kontaktfahne
16 Isolierhülse
17 Aufnahmering
18 Tellerfederpaket

19 Reduzierscheibe
20 Mutter
21 Kontaktfahne
22 Leitung
23 Leiterplatte
24 PTC-Thermofühler
25,26 Lagerelemente
27-29 Wandungsteile
30-33 Lagerflansch
34-36 O-Ring
37 Endstück
38 Lagerscheibe
39 Kühlkörper
40 Faltenbalg
41 Lagerring
42,43 Seegerring
44 Kappe
45 Flansch
46 Heizelement
47,48 Durchgangsöffnung
49 Längsachse
50 Aussparung
51 NTC-Thermofühler
52 Schutzhaube
53 Schalldämpfer
54 mittleres Teil
55 Austrittsöffnung
56 Abdeckkappe
57 Radius
58 Abschlußkappe
59 Klemmkappe
60 Scheibe
61 Schraube

**Ansprüche**

1. Ultraschall-Meßgerät zur Ermittlung von Bewegungsparametern bewegter Körper, insbesondere Weg, Geschwindigkeit, Beschleunigung, Schlupf oder dergleichen, mit zwei in einem Gehäuse gelagerten Ultraschallwandlern (Sender und Empfänger) aus je einem Schallerzeuger bzw. einem Schallempfänger, zwei Schwingkörpern und einem den Schallerzeuger bzw. Schallempfänger zwischen den Schwingkörpern einspannenden Verbindungselement,
**dadurch gekennzeichnet,**
daß jeder Ultraschallwandler (4,5) mittels mäanderförmig abgewinkelter Lagerelemente (25,26) im Gehäuse (1) gelagert ist, wobei das an der Schallaustrittsöffnung (12) bzw. Schalleintrittsöffnung (13) des Gehäuses (1) angeordnete Lagerelement (25) auf einem Schwingkörper (8) gleitbar gelagert ist.

2. Ultraschall-Meßgerät nach Anspruch 1,
**dadurch gekennzeichnet,**
daß jedes mäanderförmig abgewinkelte Lagerelement (25,26) aus mindestens zwei parallel zur Längsachse des Ultraschallwandlers (4,5) verlaufenden hülsenartigen Wandungsteilen (27,28) und einem diese verbindenden, radial verlaufenden scheibenartigen Wandungsteil (29) sowie an den freien Enden der hülsenartigen Wandungsteile (27,28) anschließenden Lagerflanschen (30,31,32,33) gebildet ist.

3. Ultraschall-Meßgerat nach Anspruch 2,
**dadurch gekennzeichnet,**
daß die Wandungsteile (27,28,29) dünnwandig ausgebildet sind.

4. Ultraschall-Meßgerat nach Anspruch 2 oder 3,
**dadurch gekennzeichnet,**
daß die Lagerflansche (30 bis 33) mit umlaufenden Einstichen zur Aufnahme von O-Ringen (34 bis 36) versehen sind.

5. Ultraschall-Meßgerät nach einem der Ansprüche 1 bis 5,
**dadurch gekennzeichnet,**
daß das Verbindungselement aus einer Zylinderschraube (10) mit Mutter (20) gebildet ist und daß zwischen der Mutter (20) und dem einen Schwingkörper (9) ein Tellerfederpaket (18) zur Aufbringung einer Vorspannkraft für den Schallerzeuger (6) bzw. für den Schallempfänger (7) angeordnet ist.

6. Ultraschall-Meßgerät nach einem der Ansprüche 1 bis 5,
**dadurch gekennzeichnet,**
daß das Gehäuse (1) zur Aufnahme der beiden Ultraschallwandler (4,5) zwei unter einem spitzen Winkel zueinander verlaufenden Durchgangsöffnungen (47,48) aufweist, deren Schallaustritts- und Schalleintrittsöffnungen (12,13) nach außen erweitert und mit Radien (57) versehen sind.

7. Ultraschall-Meßgerät nach einem der Ansprüche 1 bis 6,
**dadurch gekennzeichnet,**
daß auf das freie Ende der Zylinderschraube (10) jedes Ultraschallwandlers (4,5) ein Endstück (37) aufgeschraubt ist, das mit seiner Innenseite den Lager flansch (31) des mäanderförmigen Lagerelementes (26) gegen eine an der Mutter (20) der Zylinderschraube (10) anliegenden Lagerscheibe (38) einspannt.

8. Ultraschall-Meßgerät nach Anspruch 7,
**dadurch gekennzeichnet,**
daß das Endstück (27) des Sender-Ultraschallwandlers (4) auf der Außenseite einen Kühlkörper (39) trägt und von einem sich zwischen dem inneren Rand des Kühlkörpers (39) und dem vom Endstück (27) eingespannten Lagerelement (26) erstreckenden Faltenbalg (40) umgeben ist.

9. Ultraschall-Meßgerät nach Anspruch 7,
**dadurch gekennzeichnet,**
daß das Endstück (37) des Empfänger-Ultraschallwandlers (5) von einer die Durchgangsöffnung (47) abschließenden Kappe (44) umschlossen ist und daß im Bereich der Kappe (44) ein Heizelement (46) zur Beheizung des Empfänger-Ultraschallwandlers (5) vorgesehen ist.

10. Ultraschall-Meßgerät nach Anspruch 9,
**dadurch gekennzeichnet,**
daß das Heizelement (46) ein PTC-Heizelement ist.

11. Ultraschall-Meßgerät nach einem der Ansprüche 1 bis 10,
**dadurch gekennzeichnet,** daß in einer Seitenwand des Gehäuses (1) eine Schutzhaube (52) für ein NTC-Thermofühler (51) eingesetzt ist.

12. Ultraschall-Meßgerät nach Anspruch 11,
**dadurch gekennzeichnet,**
daß der NTC-Thermofühler (51) an seinem freien Ende mit einem Schalldämpfer (53) versehen ist.

13. Ultraschall-Meßgerät nach einem der Ansprüche 11 oder 12,
**dadurch gekennzeichnet,**
daß die Schutzhaube (52) für den NTC-Thermofühler (51) kastenförmig ausgebildet und mit einem rohrförmigen mittleren Teil (54) zur Aufnahme des NTC-Thermofühlers (51) versehen ist, wobei am inneren Ende der kastenförmigen Schutzhaube (52) eine mit einer schrägen Abdeckhaube (56) versehene Austrittsöffnung (55) vorgesehen ist.

# FIG.1

EP 0 384 949 A2

# FIG.2

EP 0 384 949 A2

# FIG.3

EP 0 384 949 A2

# FIG.4

# FIG.5

# FIG.6